# EUROPEAN PATENT APPLICATION

(11) **EP 4 319 212 A1**
(43) Date of publication of application: **07.02.2024**
(21) Application number: 22778845.2
(22) Date of filing: 28.03.2022
(51) Int. Cl.: H04W 4/24

(54) **PDU SESSION ESTABLISHMENT METHOD, RELATED DEVICE AND READABLE STORAGE MEDIUM**

(30) Priority: 01.04.2021 CN 202110357732
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN)
(74) Representative: Lavoix
(86) International application number: PCT/CN2022/083316
(87) International publication number: WO 2022/206663

(57) **Abstract**

This application discloses a PDU session establishment method, a related device, and a readable storage medium, and belongs to the field of communication technologies. The PDU session establishment method includes: sending, by relay UE, first information, where the first information indicates that a PDU session establishment request sent by the relay UE is used to request establishment of a relay PDU session, and the relay PDU session is used to relay service data of remote UE.

## Description

### CROSS-REFERENCE TO RELATED APPLICATIONS

This application claims priority to Chinese Patent Application No. 202110357732.6 filed in China on April 1, 2021, which is incorporated herein by reference in its entirety.

### TECHNICAL FIELD

This application belongs to the field of communication technologies, and specifically relates to a PDU session establishment method, a related device, and a readable storage medium.

### BACKGROUND

Currently, when relay UE (relay LTE) requests establishment of a protocol data unit (Protocol Data Unit, PDU) session (session), the relay UE requests establishment of the PDU session based on a UE route selection policy (UE Route Selection Policy, URSP) of the relay UE. In this case, a network side device determines that a PDU session that is established based on a request of the relay UE is used to send a service of the relay UE. As a result, the established PDU session does not satisfy a quality of service (Quality of Service, QoS) requirement for a service of remote LTE that is connected to the relay UE. This leads to low transmission reliability for the service of the remote UE.

### SUMMARY

Embodiments of this application provide a PDU session establishment method, a related device, and a readable storage medium, to resolve the following problem in the prior art: A PDU session that is established based on a request of relay UE cannot satisfy a QoS requirement for a service of remote UE that is connected to the relay LTE, which leads to low transmission reliability for the service of the remote UE.

According to a first aspect, a PDU session establishment method is provided, including:
sending, by relay UE, first information, where the first information indicates that a PDU session establishment request sent by the relay UE is used to request establishment of a relay PDU session, and the relay PDU session is used to relay service data of remote UE.

According to a second aspect, a PDU session establishment method is provided, including:
receiving, by a first core network device, first information, where the first information indicates that a PDU session establishment request sent by relay LTE is used to request establishment of a relay PDU session, and the relay PDU session is used to relay service data of remote UE; and
sending, by the first core network device, second information, where
the second information is determined based on the first information, and the second information is any one of the following items: a QoS rule and a policy and charging control PCC rule.

According to a third aspect, a PDU session establishment apparatus is provided. The PDU session establishment apparatus includes:
a first sending module, configured to send first information, where the first information indicates that a PDU session establishment request sent by relay LTE is used to request establishment of a relay PDU session, and the relay PDU session is used to relay service data of remote UE.

According to a fourth aspect, a PDU session establishment apparatus is provided. The PDU session establishment apparatus includes:
a second receiving module, configured to receive first information, where the first information indicates that a PDU session establishment request sent by relay UE is used to request establishment of a relay PDU session, and the relay PDU session is used to relay service data of remote UE; and
a second sending module, configured to send second information, where
the second information is determined based on the first information, and the second information is any one of the following items: a QoS rule and a policy and charging control PCC rule.

According to a fifth aspect, a terminal is provided. The terminal includes a processor, a memory, and a program or instructions stored in the memory and capable of running on the processor. When the program or the instructions are executed by the processor, steps of the method according to the first aspect are implemented.

According to a sixth aspect, a network side device is provided. The network side device includes a processor, a memory, and a program or instructions stored in the memory and capable of running on the processor. When the program or the instructions are executed by the processor, steps of the method according to the second aspect are implemented.

According to a seventh aspect, a terminal is provided, including a processor and a communication interface. The communication interface is configured to send first information, where the first information indicates that a PDU session establishment request sent by relay UE is used to request establishment of a relay PDU session, and the relay PDU session is used to relay service data of remote UE.

According to an eighth aspect, a network side device is provided, including a processor and a communication interface. The communication interface is configured to receive first information, where the first information indicates that a PDU session establishment request sent by relay UE is used to request establishment of a relay PDU session, and the relay PDU session is used to relay service data of remote UE. The first core network device is configured to send second information, where the second information is determined based on the first information, and the second information is any one of the following items: a QoS rule and a policy and charging control PCC rule.

According to a ninth aspect, a readable storage medium is provided. The readable storage medium stores a program or instructions. When the program or the instructions are executed by a processor, steps of the method according to the first aspect or steps of the method according to the second aspect are implemented.

According to a tenth aspect, a chip is provided. The chip includes a processor and a communication interface. The communication interface is coupled to the processor. The processor is configured to run a program or instructions of a network side device to implement the method according to the first aspect or the method according to the second aspect.

According to an eleventh aspect, a computer program/program product is provided. The computer program/program product is stored in a non-volatile storage medium. The computer program/program product is executed by at least one processor to implement the method according to the first aspect or the method according to the second aspect.

According to a twelfth aspect, a communication device is provided, configured to implement the method according to the first aspect or the method according to the second aspect.

In embodiments of this application, relay UE may send first information to indicate that a PDU session establishment request sent by the relay UE is used to request establishment of a relay PDU session. In this way, a network side device may establish a PDU session with reference to a QoS requirement between the relay LTE and an anchor UPF and a QoS requirement between remote UE and the relay LTE, so that an established PDU session can satisfy a forwarding requirement for a service of the remote LTE. Therefore, transmission reliability for the service of the remote UE can be improved.

### BRIEF DESCRIPTION OF DRAWINGS

FIG. 1 is a block diagram of a wireless communication system to which embodiments of this application are applicable;
FIG. 2 is a schematic diagram of a relay link establishment process according to an embodiment of this application;
FIG. 3 is a first flowchart of a PDU session establishment method according to an embodiment of this application;
FIG. 4 is a second flowchart of a PDU session establishment method according to an embodiment of this application;
FIG. 5 is a first schematic diagram of a PDU session establishment process according to an embodiment of this application;
FIG. 6 is a second schematic diagram of a PDU session establishment process according to an embodiment of this application;
FIG. 7 is a first structural diagram of a PDU session establishment apparatus according to an embodiment of this application;
FIG. 8 is a second structural diagram of a PDU session establishment apparatus according to an embodiment of this application;
FIG. 9 is a structural diagram of a communication device according to an embodiment of this application;
FIG. 10 is a structural diagram of a terminal according to an embodiment of this application; and
FIG. 11 is a diagram of a structure of a network side device according to an embodiment of this application.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the quantity of objects is not limited. For example, there may be one or more first objects. In addition, "and/or" used in the specification and claims means at least one of the associated objects. The character "/" generally indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. A new radio (New Radio, NR) system is described below as an example, and NR terms are used in most of the following descriptions, but these technologies can also be applied to an application other than an NR system application, for example, a 6th generation (6th Generation, 6G) communication system.

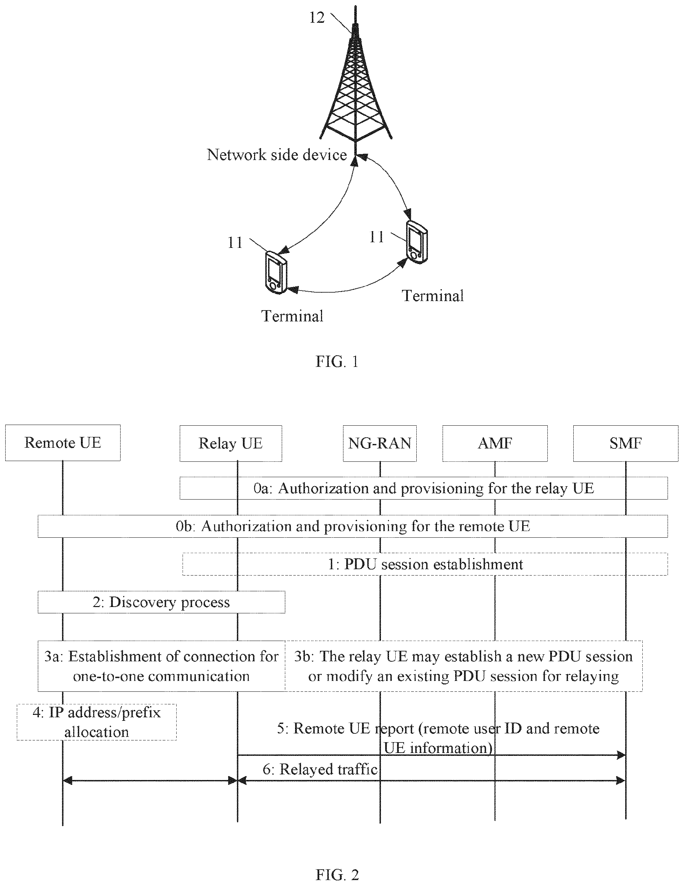

FIG. 1 is a block diagram of a wireless communication system to which the embodiments of this application are applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a sinartwatch, a bracelet, a headset, glasses, and the like. It should be noted that a specific type of the terminal 11 is not limited in this embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

A layer (Layer, L) 3 relay link establishment process is described below with reference to FIG. 2.

As shown in FIG. 2, the L3 relay link establishment process may include the following steps.

### Step 0a: An authorization and provisioning process for relay LTE (Authorization and Provisioning for Relay UE)

As shown in FIG. 2, step 0a may be performed by the relay UE (Relay UE), a new generation-radio access network (New Generation-Radio Access Network, NG-RAN), an access and mobility management function (Access and Mobility Management Function, AMF), a session management function (Session Management Function, SMF), and a user plane function (User Plane Function, UPF).

In this embodiment of this application, the relay UE may also be referred to as a proximity services UE-to-network relay (Proximity Services UE-to-Network Relay, ProSe UE-to-Network Relay), a UE-to-network relay (UE-to-Network Relay), or the like.

### Step 0b: An authorization and provisioning process for remote UE 4 (Authorization and Provisioning for Remote UE)

Step 0b may be performed by the remote UE (Remote UE), the relay UE, the NG-RAN, the AMF, the SMF, and the UPF.

### Step 1: A process of establishing a protocol data unit session (PDU session establishment)

Step 1 may be performed by the relay UE, the NG-RAN, the AMF, the SMF, and the UPF.

### Step 2: A discovery process (Discovery Process)

Step 2 may be performed by the remote UE and the relay UE. In the discovery process, the remote UE may discover one piece of relay UE.

### Step 3a: A process of establishing connection for one-to-one communication (Establishment of connection For one-to-one Communication)

As shown in FIG. 2, step 3a may be performed by the remote UE and the relay UE.

Step 3b: The relay UE may establish a new PDU session or modify an existing PDU session for relaying (Relay UE may establish a new PDU session or modify an existing PDU session for relaying).

Step 3b may be performed by the relay UE, the NG-RAN, the AMF, the SMF, and the UPF.

### Step 4: An Internet protocol (Internet Protocol, IP) address/prefix allocation (IP address/prefix allocation) process

Step 4 may be performed by the remote UE and the relay UE.

### Step 5: A reporting process performed by the remote UE (Remote LTE Report)

During implementation, the remote UE may send information such as a remote user identity (Remote User ID), remote UE information (Remote UE info), and the like to the SMF.

### Step 6: Relayed traffic (Relayed traffic)

During implementation, the relay service may be performed between the remote UE and the relay UE or between the relay UE and the UPF.

With reference to the accompanying drawings, PDU session establishment provided in the embodiments of this application is described below in detail by using some embodiments and application scenarios thereof.

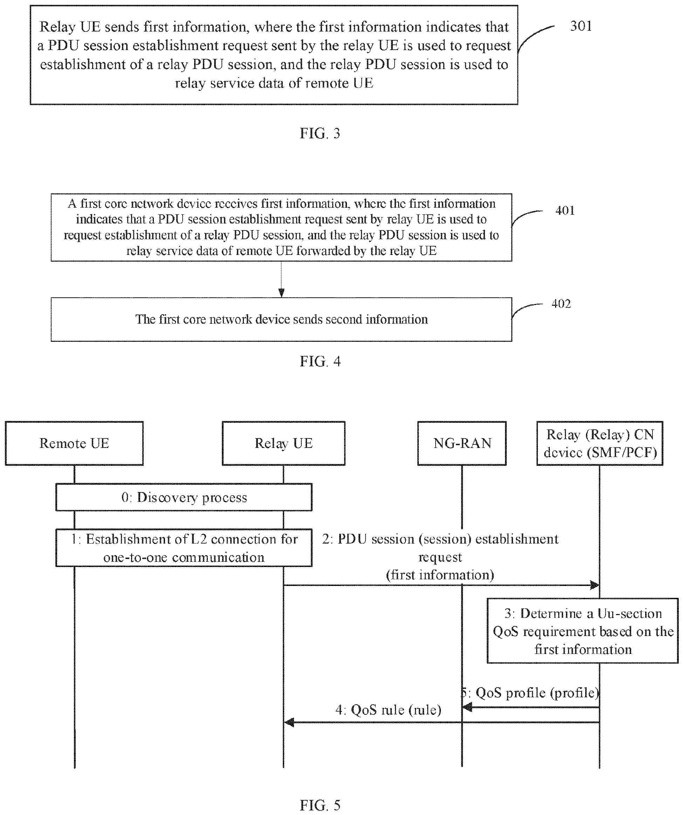

FIG. 3 is a first flowchart of a PDU session establishment method according to an embodiment of this application. The PDU session establishment method corresponding to FIG. 3 may be performed by a terminal. As shown in FIG. 3, the following steps may be included.

Step 301: Relay UE sends first information, where the first information indicates that a PDU session establishment request sent by the relay UE is used to request establishment of a relay PDU session, and the relay PDU session is used to relay service data of remote UE.

In this embodiment of this application, that relay LTE sends first information may be specifically represented as follows: The relay UE sends the first information to a first core network device. The first core network device may be at least one of an SMF and a policy control function (Policy Control Function, PCF). Details may be determined according to an actual situation. This is not limited in this embodiment of this application.

During specific implementation, the first information may directly or indirectly indicate that the PDU session establishment request sent by the relay UE is used to request establishment of the relay PDU session. In this embodiment of this application, the relay PDU session is used to relay (or forward) the service data of the remote UE.

It should be noted that, the PDU session establishment request indicated by the first information may be: some or all of PDU session establishment requests sent by the relay UE. This may be specifically determined according to an actual situation, and is not limited in this embodiment of this application.

The first information and the PDU session establishment request indicated by the first information may be associated in any one of the following manners:
(1) The first information is carried in the PDU session establishment request.
(2) The first information includes a target parameter. The target parameter is in a one-to-one correspondence with the PDU session establishment request, that is, one target parameter may be used to determine one PDU session establishment request. Optionally, the target parameter may be identification information of the PDU session establishment request, but is not limited thereto.

In manner (1), the PDU session establishment request indicated by the first information is a PDU session establishment request that carries the first information. For example, assuming that a PDU session establishment request 1 carries first information a and that a PDU session establishment request 2 carries first information b, the first information a indicates that the PDU session establishment request 1 is used to request establishment of a relay PDU session, and the first information b indicates that the PDU session establishment request 2 is used to request establishment of a relay PDU session.

In manner (2), the PDU session establishment request indicated by the first information is a PDU session establishment request that corresponds to identification information of a PDU session establishment request included in the first information. For example, assuming that first information c includes identification information of a PDU session establishment request 3 and that first information d includes identification information of a PDU session establishment request 4 and identification information of a PDU session establishment request 5, the first information c indicates that the PDU session establishment request 3 is used to request establishment of a relay PDU session, and the first information d indicates that the PDU session establishment request 4 and the PDU session establishment request 5 are used to request establishment of a relay PDU session.

For manner (2), during actual application, the relay UE may send the first information by reusing an existing message such as the PDU session establishment request, or may send the first information by using an added message. The added message is dedicatedly used to send the first information. The first information may be sent separately, or may be sent with other information. This may be specifically determined according to an actual situation, and is not limited in this embodiment of this application.

According to the PDU session establishment method of this embodiment, the relay UE may send the first information to indicate that the PDU session establishment request sent by the relay UE is used to request establishment of the relay PDU session. In this way, the first core network device may establish a PDU session with reference to a QoS requirement between the relay UE and an anchor UPF and a QoS requirement between the remote UE and the relay UE, so that an established PDU session can satisfy a forwarding requirement for a service of the remote UE. Therefore, transmission reliability for the service of the remote UE can be improved.

The first information in this embodiment of this application is described below.

Optionally, the first information may include but is not limited to at least one of the following items:
(a) a QoS requirement between the relay UE and the remote UE;
(b) relay communication indication information, where the relay communication indication information is used to indicate that a PDU session that is established based on a request of the relay UE is the relay PDU session; and
(c) a dedicated parameter of the relay PDU session.

In a case that the first information includes (a), the first information indirectly indicates that the PDU session establishment request is used to request establishment of the relay PDU session.

Optionally, the QoS requirement between the relay UE and the remote UE may include at least one of the following items: a packet delay budget (Packet Delay Budget, PDB), a packet error rate (Packet Error Rate, PER), and a PC5 QoS identifier (PC5 QoS Identifier, PQI), where PC5 may be understood as a communication interface between the relay UE and the remote UE.

In this case, further, in addition to indicating that the PDU session establishment request sent by the relay UE is used to request establishment of the relay PDU session, the first information may further indicate the QoS requirement between the relay UE and the remote UE. In this way, when establishing a PDU session based on the PDU session establishment request indicated by the first information, the first core network device may establish the relay PDU session by directly using the QoS requirement included in the first information and between the relay UE and the remote UE. In one aspect, it can be ensured that an established PDU session can satisfy a forwarding requirement for a service of the remote UE. Therefore, transmission reliability for the service of the remote UE can be improved. In another aspect, a manner of obtaining the QoS requirement between the relay UE and the remote UE by the first core network device can be simplified.

In a case that the first information includes (b), the first information directly indicates that the PDU session establishment request is used to request establishment of the relay PDU session.

In a case that the first information includes (c), the first information indirectly indicates that the PDU session establishment request is used to request establishment of the relay PDU session. The dedicated parameter of the relay PDU session, as its name implies, is dedicatedly used by the relay PDU session and differs from another parameter of a PDU session that does not satisfy a forwarding requirement for the service data of the remote UE. In this way, after receiving these parameters, the first core network device can determine that the PDU session establishment request indicated by the first information is used to request establishment of the relay PDU session, so that accuracy and reliability of establishment of the PDU session can be improved.

Optionally, the dedicated parameter may include but is not limited to at least one of the following items: a dedicated data network name (Data Network Name, DNN), dedicated single network slice selection assistance information (Single Network Slice Selection Assistance Information, SNSSAI), dedicated session and service continuity (Session and Service Continuity, SSC), and the like.

In this embodiment of this application, optionally, after the relay UE sends the first information, the method may further include:
receiving, by the relay UE, a quality of service QoS rule, where the QoS rule is determined based on the first information.

During specific implementation, after receiving the first information, the first core network device may obtain a second QoS sub-requirement based on the first information, where the second QoS sub-requirement is a QoS requirement between the relay UE and the remote UE. Considering that the relay LTE communicates with the remote UE through a PC5 interface, the second QoS sub-requirement may be referred to as a PC5-section QoS requirement, but is not limited thereto.

It can be learned from the above that the first information may have different representation forms. During actual application, for different representation forms of the first information, the first core network device may obtain the PC5-section QoS requirement in different manners. For details, refer to the following description of the first core network device. The details are not described herein.

After obtaining the PC5-section QoS requirement, the first core network device may split a first QoS requirement based on the second QoS sub-requirement to obtain a first QoS sub-requirement, where the first QoS requirement is a QoS requirement between the remote UE and an anchor user plane function UPF, and the first QoS sub-requirement is a QoS requirement between the relay UE and the anchor UPF. For ease of understanding, the first QoS requirement may be referred to as an end-to-end QoS requirement. Considering that the relay UE communicates with the UPF through a Uu interface, the first QoS sub-requirement may be referred to as a Uu-section QoS requirement, but is not limited thereto.

During actual application, a QoS requirement may be represented by using one or more parameters. For different parameters, an end-to-end QoS requirement may be split in different manners. For details, refer to the following description of the first core network device. The details are not described herein.

Then, the first core network device may generate a QoS rule (QoS rule) and a QoS profile (QoS profile) based on the Uu-section QoS requirement obtained after splitting, and may send the QoS rule to the relay LTE and send the QoS profile to a base station.

According to the foregoing manner, the Uu-section QoS requirement based on which the QoS rule and the QoS profile are generated is obtained by splitting the end-to-end QoS requirement of the remote UE based on the PC5-section QoS requirement. It can be learned that the generated QoS rule and QoS profile not only consider a QoS requirement of a section from the relay UE to the anchor UPF, namely, the Uu-section QoS requirement, but also comprehensively consider a QoS requirement of a section from the remote UE to the relay UE, namely, the PC5-section QoS requirement. In this way, it can be ensured that the generated QoS rule and QoS profile can satisfy the end-to-end QoS requirement of the remote LTE, so that an established PDU session can satisfy a forwarding requirement for a service of the remote UE. Therefore, transmission reliability for the service of the remote UE can be improved.

FIG. 4 is a second flowchart of a PDU session establishment method according to an embodiment of this application. The PDU session establishment method corresponding to FIG. 4 is performed by a first core network device. As shown in FIG. 4, the following steps may be included.

Step 401: The first core network device receives first information, where the first information indicates that a PDU session establishment request sent by relay UE is used to request establishment of a relay PDU session, and the relay PDU session is used to relay service data of remote UE.

In this embodiment of this application, the first core network device may be an SMF or a PCF. This may be specifically determined according to an actual situation, and is not limited in this embodiment of this application.

In a case that the first core network device is the SMF, that the first core network device receives first information may be specifically represented as follows: The SMF receives the first information that is sent by the relay UE.

In a case that the first core network device is the PCF, in a first implementation, that the first core network device receives first information may be represented as follows: the PCF receives the first information that is sent by the relay LTE; and in a second implementation, that the first core network device receives first information may be represented as follows: the PCF receives the first information that is sent by an SMF.

It should be noted that this embodiment is an embodiment of a network side device corresponding to the method embodiment in FIG. 3. For the first information and the relay PDU session, refer to descriptions in the method embodiment in FIG. 3. Details are not described herein again.

Optionally, the first information may include at least one of the following items:
a QoS requirement between the relay UE and the remote UE;
relay communication indication information, where the relay communication indication information is used to indicate that a PDU session that is established based on a request of the relay UE is the relay PDU session; and
a dedicated parameter of the relay PDU session.

Further, the QoS requirement between the relay UE and the remote UE may include at least one of the following items: a PDB, a PER, and a PQI.

Optionally, the first information sent by the relay UE may be carried in the PDU session establishment request, or may be sent separately from the PDU session establishment request. This may be specifically determined according to an actual situation, and is not limited in this embodiment of this application.

Step 402: The first core network device sends second information.

The second information is determined based on the first information. The second information is any one of the following items: a QoS rule and a policy and charging control (Policy and Charging Control, PCC) rule.

In a case that the first core network device is the PCF, in the foregoing first implementation, the second information may be represented as the QoS rule, where the QoS rule may be generated by the PCF based on the first information; and in the foregoing second implementation, the second information may be represented as the PCC rule, where the PCC rule may be generated by the PCF based on the first information.

In a case that the first core network device is the SMF, the second information may be represented as the QoS rule. In this case, in a third implementation, the QoS rule may be generated by the SMF based on the first information; and in a fourth implementation, the QoS rule may be generated based on a PCC rule sent by a PCF, where the PCC rule sent by the PCF is generated by the PCF based on the first information.

According to the PDU session establishment method of this embodiment, after receiving the first information that is sent by the relay UE and that indicates that the PDU session establishment request sent by the relay UE is used to request establishment of the relay PDU session, the first core network device may send the QoS rule or the PCC rule that is determined based on the first information. In this way, it can be ensured that the QoS rule or the PCC rule not only considers the QoS requirement between the relay UE and the anchor UPF, but also comprehensively considers the QoS requirement between the remote UE and the relay UE, so that an established PDU session can satisfy a forwarding requirement for a service of the remote UE. Therefore, transmission reliability for the service of the remote UE can be improved.

In this embodiment of this application, in the first implementation to the fourth implementation that are described above, the first core network device may perform the same or different processing behaviors after receiving the first information. Specific descriptions are as follows.

### I. For the foregoing fourth implementation:

Optionally, in a case that the second information is the QoS rule, after the first core network device receives the first information and before the first core network device sends the second information, the method further includes:
sending, by the first core network device, the first information to a second core network device;
receiving, by the first core network device, a PCC rule sent by the second core network device, where the PCC rule is generated by the second core network device based on the first information; and
generating, by the first core network device, the QoS rule based on the PCC rule.

In this optional implementation, the first core network device is the SMF, a second core network device is the PCF, and the second information is the QoS rule. It should be noted that this optional implementation may not be limited to being applicable to the foregoing fourth implementation.

During specific implementation, after receiving the first information sent by the relay UE, the SMF may forward the received first information to the PCF. The PCF generates the PCC rule based on the first information, and sends the PCC rule to the SMF. It should be noted that an implementation principle by which the PCF generates the PCC rule based on the first information in this case is the same as the following implementation principle by which the first core network device generates the second information based on the first information. For details, refer to the following related description. The details are not described herein.

After receiving the PCC rule that is sent by the PCF based on the first information, the SMF may generate the QoS rule based on the PCC rule. During implementation, the SMF may first generate a Uu-end QoS requirement based on the PCC rule; then, generate a QoS rule and a QoS profile based on the Uu-end QoS requirement; and send the QoS rule to the relay UE and send the QoS profile to a base station.

Optionally, the sending, by the first core network device, the first information to a second core network device includes:
sending, by the first core network device, a session management policy association create message to the second core network device, where the session management policy association create message carries the first information; and
the receiving, by the first core network device, a PCC rule sent by the second core network device includes:
   receiving, by the first core network device, a session management policy association response message sent by the second core network device, where the session management policy association response message includes the PCC rule.

In this case, the first information forwarded by the SMF to the PCF may carry the session management policy association create (SM policy association create) message; and the PCC rule sent by the PCF to the SMF may be carried in the session management policy association response (SM policy association response) message.

However, it should be noted that in some embodiments, the SMF may forward the first information to the PCF by reusing another existing message other than the SM policy association create message or using a dedicated message; and the PCF may send the PCC rule to the SMF by reusing another existing message other than the SM policy association response message or using a dedicated message. This may be specifically determined according to an actual situation, and is not limited in this embodiment of this application.

### II. For the first implementation to the third implementation that are described above:

Optionally, after the first core network device receives the first information and before the first core network device sends the second information, the method further includes:
splitting, by the first core network device, a first QoS requirement based on the first information to obtain a first QoS sub-requirement, where the first QoS requirement is a QoS requirement between the remote UE and an anchor user plane function UPF, and the first QoS sub-requirement is a QoS requirement between the relay UE and the anchor UPF; and
the second information is generated based on the first QoS sub-requirement.

In this optional implementation, the first core network device may be the SMF or the PCF, and the second information may be the QoS rule or the PCC rule. This may be specifically determined according to an actual situation, and is not limited in this embodiment of this application. It should be noted that this optional implementation may not be limited to being applicable to the first implementation to the third implementation that are described above.

During specific implementation, the first core network device may split an end-to-end QoS requirement to a Uu-section QoS requirement and a PC5-section QoS requirement based on the first information, and generate the second information based on the Uu-section QoS requirement that is obtained after the splitting.

Optionally, the splitting, by the first core network device, a first QoS requirement based on the first information to obtain a first QoS sub-requirement includes:
determining, by the first core network device, a second QoS sub-requirement based on the first information; and
splitting, by the first core network device, the first QoS requirement based on the second QoS sub-requirement to obtain the first QoS sub-requirement, where
the second QoS sub-requirement is a QoS requirement between the relay UE and the remote UE.

In this optional implementation, when the first core network device splits the end-to-end QoS requirement into the Uu-section QoS requirement and the PC5-section QoS requirement based on the first information, the first information may be used to determine the PC5-section QoS requirement. Specifically, the PC5-section QoS requirement may be determined in a manner of obtaining the Uu-section QoS requirement based on the first information. However, this is not limited hereto.

During implementation, for different representation forms of the first information, manners of obtaining the PC5-section QoS requirement may be the same or different; and the first core network device may determine the same or different PC5-section QoS requirements. Specific descriptions are as follows.

Optionally, the second QoS sub-requirement satisfies any one of the following items:
in a case that the first information includes a QoS requirement between the relay UE and the remote UE, the second QoS sub-requirement is the QoS requirement; and
in a case that the first information does not include the QoS requirement between the relay UE and the remote UE, the second QoS sub-requirement satisfies any one of the following items: being determined based on an operator policy, being determined based on a local policy, being specified in a protocol, and being configured by a network side device.

During specific implementation, in a case that the first information includes the QoS requirement between the relay UE and the remote UE, the first core network device may directly determine, as the PC5-section QoS requirement, the QoS requirement included in the first information and between the relay LTE and the remote UE. In this case, the PC5-section QoS requirement is obtained from the first information.

In a case that the first information does not include the QoS requirement between the relay UE and the remote UE, for example, in a case that the first information includes the relay communication indication information or the dedicated parameter of the relay PDU session, the first core network device may determine the PC5-section QoS requirement based on an operator policy or a local policy; or the first core network device may directly determine, as the PC5-section QoS requirement, a PC5-section QoS requirement specified in a protocol or configured by a network side device. In this case, a manner of obtaining the PC5-section QoS requirement may satisfy any one of the following items: being determined based on the operator policy, being determined based on the local policy, being specified in the protocol, and being configured by the network side device.

It can be learned that according to the foregoing manner, the first core network device may flexibly determine the PC5-section QoS requirement based on the first information in various manners, thereby improving flexibility in obtaining the PC5-section QoS requirement.

After determining the PC5-section QoS requirement based on the first information, the first core network device may split the end-to-end QoS requirement by using the determined PC5-section QoS requirement, to obtain the Uu-section QoS requirement.

In this embodiment of this application, optionally, the first QoS requirement (namely, the end-to-end QoS requirement) may include at least one of the following items: a PDB and a PER; and
the first QoS sub-requirement (namely, the Uu-section QoS requirement) may include at least one of the following items: a PDB, a PER, a 5G QoS identifier (5G QoS identifier, 5QI), a guaranteed flow bit rate (Guaranteed Flow Bit Rate, GFBR), and a maximum flow bit rate (Maximum Flow Bit Rate, MFBR).

During implementation, different parameters in the end-to-end QoS requirement may be split in the same or different manners. For example, during splitting of the PDB in the end-to-end QoS requirement, a PDB in the PC5-section QoS requirement may be subtracted from the PDB in the end-to-end QoS requirement, to obtain the PDB of the Uu-section QoS requirement. In other words, a splitting manner of the PDB is subtracting. A splitting manner of another parameter such as a PER may be the same as or different from the splitting manner of the PDB. The splitting manner of the another parameter may be specified in the protocol or configured by the network side device. This may be specifically determined according to an actual situation, and is not limited in this embodiment of this application.

In this embodiment of this application, optionally, in a case that the first information is a dedicated parameter of the relay PDU session, after the first core network device receives the first information and before the first core network device sends the second information, the method further includes:
querying, by the first core network device, UE subscription data to obtain a first query result related to the dedicated parameter; and
determining, by the first core network device in a case that the first query result indicates that the dedicated parameter is a dedicated parameter of the relay PDU session, that a first PDU session establishment request is used to request establishment of the relay PDU session.

In this optional implementation, after obtaining a parameter of the relay PDU session, the first core network device is uncertain whether the parameter is the dedicated parameter of the relay PDU session. Whether the parameter is the dedicated parameter of the relay PDU session can be determined by querying the UE subscription data. In this way, it can be ensured that a PDU session that is established is kept consistent with a PDU session that is requested to be established, so that accuracy and reliability of establishment of the PDU session can be improved.

Optionally, in a case that the second information is the QoS rule, after the first core network device receives the first information, the method further includes:
sending, by the first core network device, a QoS profile, where
the QoS profile is determined based on the first information.

It should be noted that a manner of determining the QoS profile is the same as a manner of determining the second information when the second information is the QoS rule. For details, refer to a related description. The details are not described herein again.

It should be noted that in some embodiments, when the first core network device splits the end-to-end QoS requirement into the Uu-section QoS requirement and the PC5-section QoS requirement based on the first information, the first information may be used to determine the Uu-section QoS requirement. A manner of determining the Uu-section QoS requirement based on the first information may be the same as the manner of determining the PC5-section QoS requirement based on the first information. For example, the first information may include the QoS requirement between the relay UE and the anchor UPF. For details, refer to a related description of determining the PC5-section QoS requirement based on the first information. The details are not described herein again.

The plurality of optional implementations described in this embodiment of this application may be implemented in combination with each other or may be implemented separately. This is not limited in this embodiment of this application.

For ease of understanding, example descriptions are as follows:

Relay UE sends first information to a core network device, where the first information may include at least one of the following items:
(1) QoS information (namely, a QoS requirement) between the relay UE and remote UE, where the QoS information includes at least one of the following items:
   a PDB between the relay UE and the remote UE;
   a PER between the relay UE and the remote UE; and
   a PQI between the relay UE and the remote UE;
(2) relay communication indication information, used to indicate that a PDU session requested to be established is used for relay communication; and
(3) a dedicated parameter of a relay PDU session, including at least one of the following items: a dedicated DNN, a dedicated SNSSAI, a dedicated SSC, and the like.

The core network device may perform the following step:
Step 1: Obtain first information, and perform a first operation based on the first information.

For the first information, refer to the foregoing description. Details are not described herein again.

The first operation includes:
(1) splitting end-to-end QoS information into PC5-section QoS information and Uu-section QoS information, where the QoS information may include at least one of the following items: a PDB, a PER, a PQI, a 5QI, and the like; and
(2) generating a Uu-section QoS rule and a Uu-section QoS profile based on the Uu-section QoS information, sending the Uu-section QoS rule to the relay UE, and sending the Uu-section QoS profile to a gNB.

In a case that the first information indicates, by carrying the QoS information between the relay UE and the remote UE, that a PDU session requested to be established is used for relay communication, the splitting end-to-end QoS information into PC5-section QoS information and Uu-section QoS information includes: determining the Uu-section QoS information by subtracting the QoS information between the relay UE and the remote UE from the end-to-end QoS information.

In a case that the first information indicates, by carrying the relay communication indication information and the dedicated parameter of the relay PDU session, that a PDU session requested to be established is used for relay communication, the Uu-section QoS information may be determined by using an operator policy or by performing implementation such as fixing the PC5-section QoS information.

In a case that the first information includes the dedicated parameter of the relay PDU session, whether the PDU session is used for relay communication may be determined by querying the UE subscription data based on the first information.

### Embodiment 1

As shown in FIG. 5, the PDU session establishment method may include the following steps:
Step 0: Remote UE and relay UE perform a discovery process, where the remote UE discovers one piece of relay UE.
Step 1: The remote UE and the relay UE perform a process of establishing L2 connection for one-to-one communication.
Step 2: The relay UE sends a PDU session establishment request to a corresponding relay core network (Core Network, CN) device, where the PDU session establishment request carries first information.

For the first information, refer to the foregoing description. Details are not described herein again.

Step 3: The relay CN device determines Uu-section QoS information based on the first information.

Further, the relay CN device generates a Uu-section QoS rule and a Uu-section QoS profile based on the Uu-section QoS information.

Step 4: The relay CN device sends the generated Uu-section QoS rule to the relay UE.

Step 5: The relay CN device sends the generated Uu-section QoS profile to a gNB.

In embodiment 1, the relay CN device may be an SMF or a PCF. This may be specifically determined according to an actual situation, and is not limited in this embodiment of this application.

### Embodiment 2

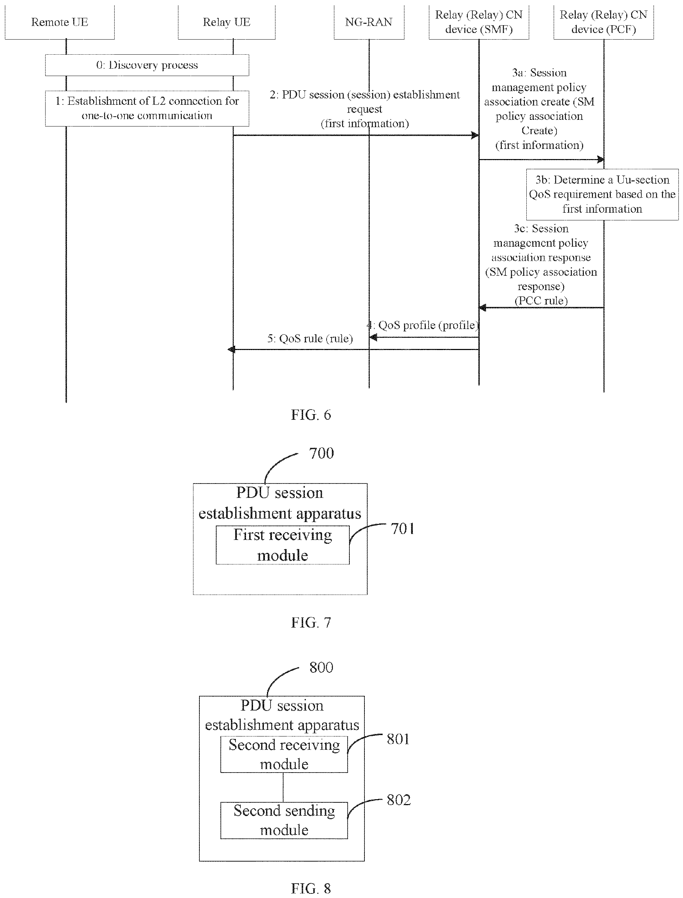

As shown in FIG. 6, the PDU session establishment method may include the following steps:
Step 0: Remote UE and relay UE perform a discovery process, where the remote UE discovers one piece of relay UE.
Step 1: The remote UE and the relay UE perform a process of establishing L2 connection for one-to-one communication.
Step 2: The relay UE sends a PDU session establishment request to a corresponding SMF, where the PDU session establishment request carries first information.
Step 3a. After receiving the first information, the SMF sends the first information to a PCF by using an SM policy association create message.
Step 3b: The PCF determines Uu-section QoS information based on the first information.

Further, after determining the Uu-section QoS information based on the first information, the PCF generates a PCC rule.

Step 3c: The PCF sends the generated PCC rule to the SMF by using an SM policy association response message.

The SMF generates the Uu-section QoS information based on the received PCC rule, and generates a Uu-section QoS rule and a Uu-section QoS profile based on the Uu-section QoS information.

Step 4: The SMF sends the generated Uu-section QoS rule to the relay UE.

Step 5: The SMF sends the generated Uu-section QoS profile to a gNB.

According to this embodiment of this application, the following problem can be avoided: An established PDU session cannot meet a data forwarding requirement of remote UE. Therefore, reliability of the PDU session can be improved.

It should be noted that, the PDU session establishment method provided in this embodiment of this application may be performed by a PDU session establishment apparatus, or a control module that is in the PDU session establishment apparatus and that is used for performing the PDU session establishment method. In the embodiments of this application, the PDU session establishment method being performed by a PDU session establishment apparatus is used as an example to describe the PDU session establishment apparatus provided in the embodiments of this application.

FIG. 7 is a structural diagram of a PDU session establishment apparatus according to an embodiment of this application.

As shown in FIG. 1, the PDU session establishment apparatus 700 includes:
a first sending module 701, configured to send first information, where the first information indicates that a PDU session establishment request sent by relay UE is used to request establishment of a relay PDU session, and the relay PDU session is used to relay service data of remote UE.

Optionally, the PDU session establishment apparatus 700 further includes:
a first receiving module, configured to receive a quality of service QoS rule, where the QoS rule is determined based on the first information.

Optionally, the first information includes at least one of the following items:
a QoS requirement between the relay UE and the remote UE;
relay communication indication information, where the relay communication indication information is used to indicate that a PDU session that is established based on a request of the relay UE is the relay PDU session; and
a dedicated parameter of the relay PDU session.

Optionally, the QoS requirement includes at least one of the following items: a packet delay budget PDB, a packet error rate PER, and a PC5 QoS identifier PQI.

Optionally, the first information is carried in the PDU session establishment request.

The PDU session establishment apparatus 700 may be an apparatus or an electronic device having an operating system, or may be a component, an integrated circuit, or a chip in a terminal. The apparatus or electronic device may be a mobile terminal or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The PDU session establishment apparatus 700 provided in this embodiment of this application can implement each process implemented in the method embodiment in FIG. 3, with the same technical effects achieved. To avoid repetition, details are not described herein again.

FIG. 8 is a structural diagram of a PDU session establishment apparatus according to an embodiment of this application.

As shown in FIG. 8, the PDU session establishment apparatus 800 includes:
a second receiving module 801, configured to receive first information, where the first information indicates that a PDU session establishment request sent by relay UE is used to request establishment of a relay PDU session, and the relay PDU session is used to relay service data of remote UE; and
a second sending module 802, configured to send second information, where
the second information is determined based on the first information, and the second information is any one of the following items: a QoS rule and a policy and charging control PCC rule.

Optionally, in a case that the second information is the QoS rule, the PDU session establishment apparatus 800 further includes:
a third sending module, configured to send the first information to a second core network device;
a third receiving module, configured to receive a PCC rule sent by the second core network device, where the PCC rule is generated by the second core network device based on the first information; and
a generating module, configured to generate the QoS rule based on the PCC rule.

Optionally, the third sending module is specifically configured to send a session management policy association create message to the second core network device, where the session management policy association create message carries the first information; and
the third receiving module is specifically configured to receive a session management policy association response message sent by the second core network device, where the session management policy association response message includes the PCC rule.

Optionally, the first information includes at least one of the following items:
a QoS requirement between the relay UE and the remote UE;
relay communication indication information, where the relay communication indication information is used to indicate that a PDU session that is established based on a request of the relay LTE is the relay PDU session; and
a dedicated parameter of the relay PDU session.

Optionally, the QoS requirement includes at least one of the following items: a PDB, a PER, and a PQI.

Optionally, the PDU session establishment apparatus 800 further includes:
a first determining module, configured to split a first QoS requirement based on the first information to obtain a first QoS sub-requirement, where the first QoS requirement is a QoS requirement between the remote UE and an anchor user plane function UPF, and the first QoS sub-requirement is a QoS requirement between the relay UE and the anchor UPF; and
the second information is generated based on the first QoS sub-requirement.

Optionally, the first determining module includes:
a first determining unit, configured to determine a second QoS sub-requirement based on the first information; and
a splitting unit, configured to split the first QoS requirement based on the second QoS sub-requirement to obtain the first QoS sub-requirement, where
the second QoS sub-requirement is a QoS requirement between the relay UE and the remote UE.

Optionally, the second QoS sub-requirement satisfies any one of the following items:
in a case that the first information includes a QoS requirement between the relay UE and the remote UE, the second QoS sub-requirement is the QoS requirement; and
in a case that the first information does not include the QoS requirement between the relay UE and the remote UE, the second QoS sub-requirement satisfies any one of the following items: being determined based on an operator policy, being determined based on a local policy, being specified in a protocol, and being configured by a network side device.

Optionally, the first QoS requirement includes at least one of the following items: a PDB and a PER; and
the first QoS sub-requirement includes at least one of the following items: a PDB, a PER, and a 5G QoS identifier 5QI.

Optionally, in a case that the first information is a dedicated parameter of the relay PDU session, the PDU session establishment apparatus 800 further includes:
a querying module, configured to query LTE subscription data to obtain a first query result related to the dedicated parameter; and
a second determining module, configured to: determine, in a case that the first query result indicates that the dedicated parameter is a dedicated parameter of the relay PDU session, that a first PDU session establishment request is used to request establishment of the relay PDU session.

Optionally, the PDU session establishment apparatus 800 further includes:
a fourth sending module, configured to send a QoS profile, where
the QoS profile is determined based on the first information.

The PDU session establishment apparatus 800 may be an apparatus, or may be a component, an integrated circuit, or a chip in a network side device. The network side device may include but is not limited to the types of the foregoing listed network side device 12. This is not specifically limited in this embodiment of this application.

The PDU session establishment apparatus 800 provided in this embodiment of this application can implement each process implemented in the method embodiment of FIG. 4, with the same technical effects achieved. To avoid repetition, details are not described herein again.

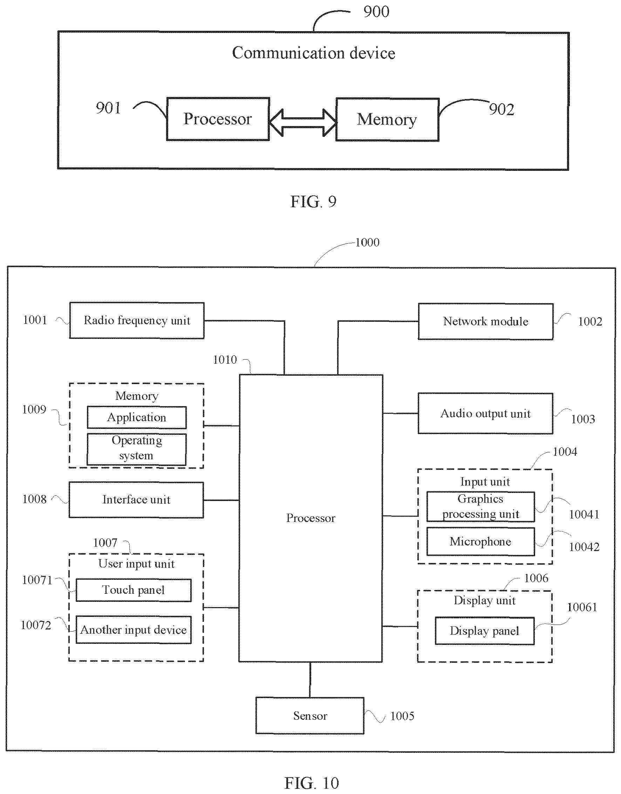

Optionally, as shown in FIG. 9, an embodiment of this application further provides a communication device 900, including a processor 901, a memory 902, and a program or instructions stored in the memory 902 and capable of running on the processor 901. For example, in a case that the communication device 900 is a terminal, when the program or the instructions are executed by the processor 901, each process of the method embodiment in FIG. 3 is implemented, with the same technical effects achieved. In a case that the communication device 900 is a network side device, when the program or the instructions are executed by the processor 901, each process of the method embodiment in FIG. 4 is implemented, with the same technical effects achieved. To avoid repetition, details are not described herein again.

An embodiment of this application further provides a terminal, including a processor and a communication interface. The communication interface is configured to send first information, where the first information indicates that a PDU session establishment request sent by relay UE is used to request establishment of a relay PDU session, and the relay PDU session is used to relay service data of remote UE. The terminal embodiment corresponds to the foregoing terminal side method embodiment. All implementation processes and implementations in the foregoing method embodiment are applicable to the terminal embodiment, with the same technical effects achieved. Specifically, FIG. 10 is a schematic diagram of a hardware structure of a terminal according to an embodiment of this application.

FIG. 10 is a schematic diagram of a hardware structure of a terminal according to an embodiment of this application.

A terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 10 constitutes no limitation on the terminal, and the terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application or instruction required by at least one function (for example, a sound play function or an image display function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application, instructions, and the like. The modem processor mainly processes wireless communication, such as a baseband processor. It may be understood that the modem processor may alternatively be not integrated in the processor 1010.

The radio frequency unit 1001 is configured to send first information, where the first information indicates that a PDU session establishment request sent by relay UE is used to request establishment of a relay PDU session, and the relay PDU session is used to relay service data of remote UE.

It should be noted that the terminal 1000 in this embodiment may implement each process in the method embodiment in FIG. 3 in embodiments of this application, with the same beneficial effects achieved. To avoid repetition, details are not described herein again.

An embodiment of this application further provides a network side device, including a processor and a communication interface. The communication interface is configured to receive first information, where the first information indicates that a PDU session establishment request sent by relay UE is used to request establishment of a relay PDU session, and the relay PDU session is used to relay service data of remote UE. The first core network device sends second information, where the second information is determined based on the first information, and the second information is any one of the following items: a QoS rule and a policy and charging control PCC rule. The network side device embodiment corresponds to the foregoing network side device method embodiment. All implementation processes and implementations in the foregoing method embodiment are applicable to the network side device embodiment, with the same technical effects achieved.

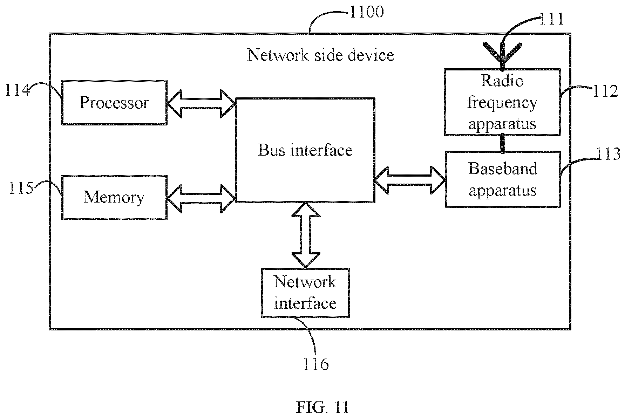

Specifically, an embodiment of this application further provides a network side device. As shown in FIG. 11, a network device 1100 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes information to be sent and sends the information to the radio frequency apparatus 112, and the radio frequency apparatus 112 processes the received information and sends the information through the antenna 111.

The foregoing band processing apparatus may be located in the baseband apparatus 113, and the method performed by the network side device in the foregoing embodiment may be implemented in the baseband apparatus 113. The baseband apparatus 113 includes a processor 114 and a memory 115.

The baseband apparatus 113 may include, for example, at least one baseband board. A plurality of chips are disposed on the baseband board. As shown in FIG. 11, one chip is, for example, the processor 114, connected to the memory 115, to invoke a program in the memory 115, thereby performing operations of the network device shown in the foregoing method embodiment.

The baseband apparatus 113 may further include a network interface 116, configured to exchange information with the radio frequency apparatus 112. For example, the interface is a common public radio interface (common public radio interface, CPRI).

Specifically, the network side device in this embodiment of this application further includes instructions or a program stored in the memory 115 and capable of running on the processor 114. The processor 114 invokes the instructions or the program in the memory 115 to perform each process of the method embodiment in FIG. 4, with the same technical effects achieved. To avoid repetition, details are not described herein again.

An embodiment of this application further provides a computer-readable storage medium. The computer-readable storage medium stores a computer program. When the computer program is executed by a processor, each process in the method embodiment in FIG. 4 is implemented, with the same technical effects achieved. To avoid repetition, details are not described herein again. The computer-readable storage medium includes a read-only memory (Read-only Memory, ROM), a random access memory (Random Access Memory, RAM), a magnetic disk, or an optical disc.

An embodiment of this application further provides a readable storage medium. The readable storage medium stores a program or instructions. When the program or the instructions are executed by a processor, each process in the method embodiment in FIG. 3 or FIG. 4 is implemented, with the same technical effects achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a computer program product. The computer program product is stored in a non-transitory storage medium. When the computer program product is executed by at least one processor, each process in the method embodiment in FIG. 3 or FIG. 4 is implemented, with the same technical effects achieved. To avoid repetition, details are not described herein again.

An embodiment of this application further provides a chip. The chip includes a processor and a communication interface. The communication interface is coupled to the processor, and when the processor is configured to run a program or instructions of a network side device, each process of the method embodiment in FIG. 3 or FIG. 4 is implemented, with the same technical effects achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by a phrase "including a ..." does not preclude the existence of other identical elements in the process, preclude the presence of additional identical elements in the process, method, article, or apparatus that includes the element. Furthermore, it should be noted that the scope of the methods and apparatuses in the implementations of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

Embodiments of this application are described above with reference to the accompanying drawings, but this application is not limited to the foregoing implementations. The foregoing embodiments are only illustrative rather than restrictive. Inspired by this application, a person of ordinary skill in the art can still derive many variations without departing from the essence of this application and the protection scope of the claims. All these variations shall fall within the protection of this application.

## Claims

1. A protocol data unit PDU session establishment method, comprising:
sending, by relay UE, first information, wherein the first information indicates that a PDU session establishment request sent by the relay UE is used to request establishment of a relay PDU session, and the relay PDU session is used to relay service data of remote UE.

2. The method according to claim 1, wherein after the sending, by relay UE, first information, the method further comprises:
receiving, by the relay UE, a quality of service QoS rule, wherein the QoS rule is determined based on the first information.

3. The method according to claim 1, wherein the first information comprises at least one of the following items:
a QoS requirement between the relay UE and the remote UE;
relay communication indication information, wherein the relay communication indication information is used to indicate that a PDU session that is established based on a request of the relay UE is the relay PDU session; and
a dedicated parameter of the relay PDU session.

4. The method according to claim 3, wherein the QoS requirement comprises at least one of the following items: a packet delay budget PDB, a packet error rate PER, and a PC5 QoS identifier PQI.

5. The method according to claim 1, wherein the first information is carried in the PDU session establishment request.

6. APDU session establishment method, comprising:
receiving, by a first core network device, first information, wherein the first information indicates that a PDU session establishment request sent by relay UE is used to request establishment of a relay PDU session, and the relay PDU session is used to relay service data of remote UE; and
sending, by the first core network device, second information, wherein
the second information is determined based on the first information, and the second information is any one of the following items: a QoS rule and a policy and charging control PCC rule.

7. The method according to claim 6, wherein in a case that the second information is the QoS rule, after the receiving, by a first core network device, first information, and before the sending, by the first core network device, second information, the method further comprises:
sending, by the first core network device, the first information to a second core network device;
receiving, by the first core network device, a PCC rule sent by the second core network device, wherein the PCC rule is generated by the second core network device based on the first information; and
generating, by the first core network device, the QoS rule based on the PCC rule.

8. The method according to claim 7, wherein the sending, by the first core network device, the first information to a second core network device comprises:
sending, by the first core network device, a session management policy association create message to the second core network device, wherein the session management policy association create message carries the first information; and
the receiving, by the first core network device, a PCC rule sent by the second core network device comprises:
receiving, by the first core network device, a session management policy association response message sent by the second core network device, wherein the session management policy association response message comprises the PCC rule.

9. The method according to claim 6, wherein the first information comprises at least one of the following items:
a QoS requirement between the relay UE and the remote UE;
relay communication indication information, wherein the relay communication indication information is used to indicate that a PDU session that is established based on a request of the relay LTE is the relay PDU session; and
a dedicated parameter of the relay PDU session.

10. The method according to claim 9, wherein the QoS requirement comprises at least one of the following items: a PDB, a PER, and a PQI.

11. The method according to claim 6, wherein after the receiving, by a first core network device, first information, and before the sending, by the first core network device, second information, the method further comprises:
splitting, by the first core network device, a first QoS requirement based on the first information to obtain a first QoS sub-requirement, wherein the first QoS requirement is a QoS requirement between the remote LTE and an anchor user plane function UPF, and the first QoS sub-requirement is a QoS requirement between the relay UE and the anchor UPF; and
the second information is generated based on the first QoS sub-requirement.

12. The method according to claim 11, wherein the splitting, by the first core network device, a first QoS requirement based on the first information to obtain a first QoS sub-requirement comprises:
determining, by the first core network device, a second QoS sub-requirement based on the first information; and
splitting, by the first core network device, the first QoS requirement based on the second QoS sub-requirement to obtain the first QoS sub-requirement, wherein
the second QoS sub-requirement is a QoS requirement between the relay UE and the remote UE.

13. The method according to claim 12, wherein the second QoS sub-requirement satisfies any one of the following items:
in a case that the first information comprises a QoS requirement between the relay UE and the remote UE, the second QoS sub-requirement is the QoS requirement; and
in a case that the first information does not comprise the QoS requirement between the relay UE and the remote UE, the second QoS sub-requirement satisfies any one of the following items: being determined based on an operator policy, being determined based on a local policy, being specified in a protocol, and being configured by a network side device.

14. The method according to claim 11, wherein the first QoS requirement comprises at least one of the following items: a PDB and a PER; and
the first QoS sub-requirement comprises at least one of the following items: a PDB, a PER, and a 5G QoS identifier 5QI.

15. The method according to claim 6, wherein in a case that the first information is a dedicated parameter of the relay PDU session, after the receiving, by a first core network device, first information, and before the sending, by the first core network device, second information, the method further comprises:
querying, by the first core network device, UE subscription data to obtain a first query result related to the dedicated parameter; and
determining, by the first core network device in a case that the first query result indicates that the dedicated parameter is a dedicated parameter of the relay PDU session, that a first PDU session establishment request is used to request establishment of the relay PDU session.

16. The method according to claim 6, wherein in a case that the second information is the QoS rule, after the receiving, by a first core network device, first information, the method further comprises:
sending, by the first core network device, a QoS profile, wherein
the QoS profile is determined based on the first information.

17. A PDU session establishment apparatus, comprising:
a first sending module, configured to send first information, wherein the first information indicates that a PDU session establishment request sent by relay UE is used to request establishment of a relay PDU session, and the relay PDU session is used to relay service data of remote UE.

18. The PDU session establishment apparatus according to claim 17, wherein the PDU session establishment apparatus further comprises:
a first receiving module, configured to receive a quality of service QoS rule, wherein the QoS rule is determined based on the first information.

19. The PDU session establishment apparatus according to claim 17, wherein the first information comprises at least one of the following items:
a QoS requirement between the relay UE and the remote UE;
relay communication indication information, wherein the relay communication indication information is used to indicate that a PDU session that is established based on a request of the relay UE is the relay PDU session; and
a dedicated parameter of the relay PDU session.

20. The PDU session establishment apparatus according to claim 19, wherein the QoS requirement comprises at least one of the following items: a packet delay budget PDB, a packet error rate PER, and a PC5 QoS identifier PQI.

21. The PDU session establishment apparatus according to claim 17, wherein the first information is carried in the PDU session establishment request.

22. APDU session establishment apparatus, comprising:
a second receiving module, configured to receive first information, wherein the first information indicates that a PDU session establishment request sent by relay UE is used to request establishment of a relay PDU session, and the relay PDU session is used to relay service data of remote UE; and
a second sending module, configured to send second information, wherein
the second information is determined based on the first information, and the second information is any one of the following items: a QoS rule and a policy and charging control PCC rule.

23. The PDU session establishment apparatus according to claim 22, wherein in a case that the second information is the QoS rule, the PDU session establishment apparatus further comprises:
a third sending module, configured to send the first information to a second core network device;
a third receiving module, configured to receive a PCC rule sent by the second core network device, wherein the PCC rule is generated by the second core network device based on the first information; and
a generating module, configured to generate the QoS rule based on the PCC rule.

24. The PDU session establishment apparatus according to claim 23, wherein the third sending module is specifically configured to send a session management policy association create message to the second core network device, wherein the session management policy association create message carries the first information; and
the third receiving module is specifically configured to receive a session management policy association response message sent by the second core network device, wherein the session management policy association response message comprises the PCC rule.

25. The PDU session establishment apparatus according to claim 22, wherein the first information comprises at least one of the following items:
a QoS requirement between the relay UE and the remote UE;
relay communication indication information, wherein the relay communication indication information is used to indicate that a PDU session that is established based on a request of the relay LTE is the relay PDU session; and
a dedicated parameter of the relay PDU session.

26. The PDU session establishment apparatus according to claim 25, wherein the QoS requirement comprises at least one of the following items: a PDB, a PER, and a PQI.

27. The PDU session establishment apparatus according to claim 22, wherein the PDU session establishment apparatus further comprises:
a first determining module, configured to split a first QoS requirement based on the first information to obtain a first QoS sub-requirement, wherein the first QoS requirement is a QoS requirement between the remote LTE and an anchor user plane function UPF, and the first QoS sub-requirement is a QoS requirement between the relay LTE and the anchor UPF; and
the second information is generated based on the first QoS sub-requirement.

28. The PDU session establishment apparatus according to claim 27, wherein the first determining module comprises:
a first determining unit, configured to determine a second QoS sub-requirement based on the first information; and
a splitting unit, configured to split the first QoS requirement based on the second QoS sub-requirement to obtain the first QoS sub-requirement, wherein
the second QoS sub-requirement is a QoS requirement between the relay UE and the remote UE.

29. The PDU session establishment apparatus according to claim 28, wherein the second QoS sub-requirement satisfies any one of the following items:
in a case that the first information comprises a QoS requirement between the relay UE and the remote UE, the second QoS sub-requirement is the QoS requirement; and
in a case that the first information does not comprise the QoS requirement between the relay UE and the remote UE, the second QoS sub-requirement satisfies any one of the following items: being determined based on an operator policy, being determined based on a local policy, being specified in a protocol, and being configured by a network side device.

30. The PDU session establishment apparatus according to claim 27, wherein the first QoS requirement comprises at least one of the following items: a PDB and a PER; and
the first QoS sub-requirement comprises at least one of the following items: a PDB, a PER, and a 5G QoS identifier 5QI.

31. The PDU session establishment apparatus according to claim 22, wherein in a case that the first information is a dedicated parameter of the relay PDU session, the PDU session establishment apparatus further comprises:
a querying module, configured to query UE subscription data to obtain a first query result related to the dedicated parameter; and
a second determining module, configured to: determine, in a case that the first query result indicates that the dedicated parameter is a dedicated parameter of the relay PDU session, that a first PDU session establishment request is used to request establishment of the relay PDU session.

32. The PDU session establishment apparatus according to claim 22, wherein the PDU session establishment apparatus further comprises:
a fourth sending module, configured to send a QoS profile, wherein
the QoS profile is determined based on the first information.

33. A terminal, comprising: a processor, a memory, and a program or instructions stored in the memory and capable of running on the processor, wherein when the program or the instructions are executed by the processor, steps of the PDU session establishment method according to any one of claims 1 to 5 are implemented.

34. A network side device, comprising: a processor, a memory, and a program or instructions stored in the memory and capable of running on the processor, wherein when the program or the instructions are executed by the processor, steps of the PDU session establishment method according to any one of claims 6 to 16 are implemented.

35. A readable storage medium, wherein the readable storage medium stores a program or instructions, and when the program or the instructions are executed by a processor, steps of the PDU session establishment method according to any one of claims 1 to 5 or steps of the PDU session establishment method according to any one of claims 6 to 16 are implemented.

36. A chip, comprising a processor and a communication interface, wherein the communication interface is coupled with the processor, and the processor is configured to run a program or instructions to implement steps of the PDU session establishment method according to any one of claims 1 to 5 or steps of the PDU session establishment method according to any one of claims 6 to 16.

37. A computer program product, wherein the computer program product is stored in a non-transitory readable storage medium, and the computer program product is executed by at least one processor of relay UE to implement steps of the PDU session establishment method according to any one of claims 1 to 5, or the computer program product is executed by at least one processor of a first core network device to implement steps of the PDU session establishment method according to any one of claims 6 to 16.

38. A communication device, configured to implement steps of the PDU session establishment method according to any one of claims 1 to 5 or steps of the PDU session establishment method according to any one of claims 6 to 16.
